Europäisches Patentamt

European Patent Office

Office européen des brevets

(11) Veröffentlichungsnummer: **0 281 769**
**A2**

(12) # EUROPÄISCHE PATENTANMELDUNG

(21) Anmeldenummer: **88101745.3**

(51) Int. Cl.⁴: **B60T 8/44**

(22) Anmeldetag: **06.02.88**

(30) Priorität: **11.03.87 DE 3707729**

(43) Veröffentlichungstag der Anmeldung:
**14.09.88 Patentblatt 88/37**

(84) Benannte Vertragsstaaten:
**AT DE FR GB SE**

(71) Anmelder: **ROBERT BOSCH GMBH**
**Postfach 50**
**D-7000 Stuttgart 1(DE)**

(72) Erfinder: **Käs, Günter**
**Markelsheimer Strasse 70**
**D-7000 Stuttgart 40(DE)**
Erfinder: **Stegmaier, Alwin**
**Breslauer Strasse 3**
**D-7141 Schwieberdingen(DE)**

(54) **Hydraulische Fahrzeugsbremsanlage mit Blockierschutzeinrichtung.**

(57) Die vorgeschlagene Fahrzeugbremsanlage (2) hat einen hydraulischen Bremskraftverstärker (3), einen Hauptbremszylinder (4), Radbremsen (5, 6, 7, 8) und eine Druckquelle (9) zum Betreiben des Bremskraftverstärkers (3). Die Fahrzeugsbremsanlage hat des weiteren eine Blockierschutzeinrichtung, die aus einem Hilfszylinder (15) mit einem Hilfskolben (16) und Ventilanordnungen (14, 10, 11, 12, 13) besteht. Im Blockierschutzfall wird, von einer der Ventilanordnungen (14) gesteuert, der Hilfskolben (16) beaufschlagt, und er wirkt gegen den Bremskraftverstärker und senkt dadurch den Druck im Hauptbremszylinder (4). Dadurch sinkt durch Aufhalten der Ventilanordnung, die einem blockiergefährdeten Rad zugeordnet ist, der Bremsdruck in der betreffenden Radbremse. Des weiteren sind Ventilanordnungen (11, 13) so weitergebildet. daß unter Einbeziehung der Ventilanordnung (14) mittels Druck aus der Druckquelle (9) Antriebsschlupf an Antriebsrädern begrenzbar ist.

FIG.1

## Hydraulische Fahrzeugbremsanlage mit Blockierschutzeinrichtung

Stand der Technik

Die Erfindung geht aus von einer Fahrzeugbremsanlage nach der Gattung des Hauptanspruchs.

Durch die DE-OS 36 12 793 ist eine Fahrzeugbremsanlage bekannt mit einem hydraulischen Bremskraftverstärker, mit einem Hilfszylinder und einem Hilfskolben und mit einer Ventilanordnung als Blockierschutzeinrichtung und mit einer Druckquelle zur Versorgung des Bremskraftverstärkers. Durch Ansteuern der Ventilanordnung wird der Hilfskolben beaufschlagt, der dadurch einem Verstärkerkolben des Bremskraftverstärkers entgegenwirkt und dadurch in die Blockiergefahr beseitigender Weise Bremsdrücke in einem Hauptbremszylinder der Bremsanlage absenkt. Weitere Ventilanordnungen sind zwischen diesem Hauptbremszylinder und den Radbremsen angeordnet, damit in denjenigen Radbremsen, an denen keine Radblockiergefahr auftritt, Bremsdrücke konstant gehalten werden können.

Durch die US-PS 4 416 347 ist eine Fahrzeugbremsanlage mit einem hydraulischen Bremskraftverstärker und einer Einrichtung bekannt, die bedarfsweise als eine Blockierschutzeinrichtung und eine Antriebs schlupfbegrenzungseinrichtung arbeitet. In beiden Betriebsarten wird zur Bremsdruckerzeugung und zur Bremsdruckmodulation die Beaufschlagung des wenigstens einen Bremskraftverstärkerkolbens mittels einer Ventilanordnung gesteuert. Hierbei wird im Blockierschutzfall der Druck aus einem den Bremskraftverstärker versorgenden Bremsventil mittels der Ventilanordnung moduliert. Im Fall der Antriebsschlupfbegrenzung wird mittels der Ventilanordnung Druckmittel aus einer Druckquelle direkt in den Bremskraftverstärker eingeleitet. Nachteilig ist, daß dann, wenn ein Antriebsschlupfschutzfall zugunsten eines Blockierschutzbetriebs abzubrechen ist, wenigstens einer der Hauptbremszylinderkolben sich nicht in seiner normalen usgangsstellung befindet.

Vorteile der Erfindung

Die erfindungsgemäße Fahrzeugbremsanlage mit den kennzeichnenden Merkmalen des Anspruchs 1 und deren Ausgestaltungen mit den kennzeichnenden Merkmalen der Ansprüche 2 und 3 haben den Vorteil, daß während des automatischen Erzeugens und Veränderns von Bremsdrücken zur Verminderung beispielsweise von Antriebsschlupf an einem oder mehreren Rädern und/oder zum Festhalten des Fahrzeugs auf Steigungsstrecken zum nachfolgenden bequemeren Anfahren die Hauptbremszylinderkolben keine Bremsdrücke erzeugenden Pumpenhübe auszuführen brauchen. Demgemäß befinden sie sich grundsätzlich in ihren Ausgangsstellungen, was zum Einleiten von normalen Bremsvorgängen vorteilhaft ist.

Die kennzeichnenden Merkmale der Ansprüche 4 und 5 geben praktische Ausführungsbeispiele an, bei denen Ventilanordnungen in einfacher Weise mit aus dem Stand der Technik entnehmbaren 3/3-Ventilen aufgebaut sind.

Die kennzeichnenden Merkmale der Ansprüche 6 und 9 geben Ausführungsbeispiele an, bei denen in vorteilhafter Weise als Druckquelle beispielsweise eine ohnehin im Fahrzeug vorhandene Öldruckpumpe verwendbar ist, obwohl die Radbremsen selbst in üblicher Weise mittels eines hierfür typischen Druckmittels beaufschlagt werden. Durch die in den anderen Ansprüchen aufgeführten Maßnahmen sind vorteilhafte Weiterbildungen und Verbesserungen der im Hauptanspruch angegebenen Fahrzeugbremsanlage möglich. Vorteilhaft ist bei dem Ausführungsbeispielen mit den kennzeichnenden Merkmalen des Anspruchs 7, daß auch im Betrieb der Fahrzeuganlage beim Begrenzen von Antriebsschlupf oder während des vorübergehenden Anhaltens des Fahrzeugs das Bremspedal in gewohnter Weise zur Inbetriebsetzung dieser Fahrzeugbremsanlage mit wenig Kraft aus seiner Ausgangsstellung bewegbar ist.

Zeichnung

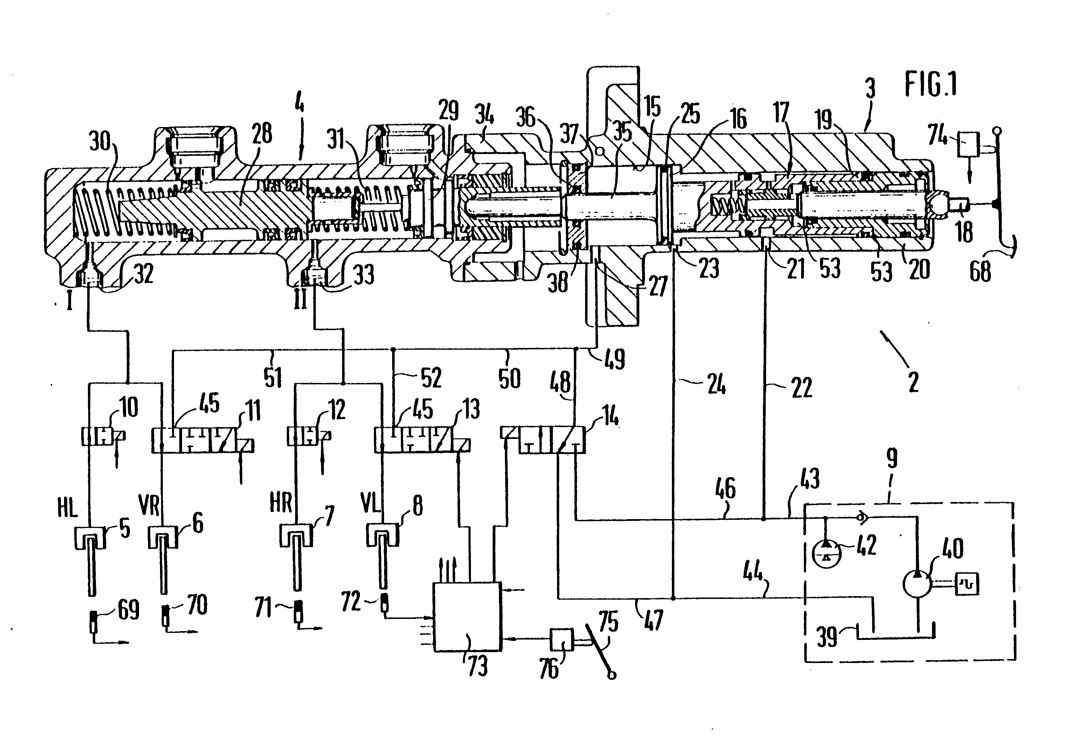

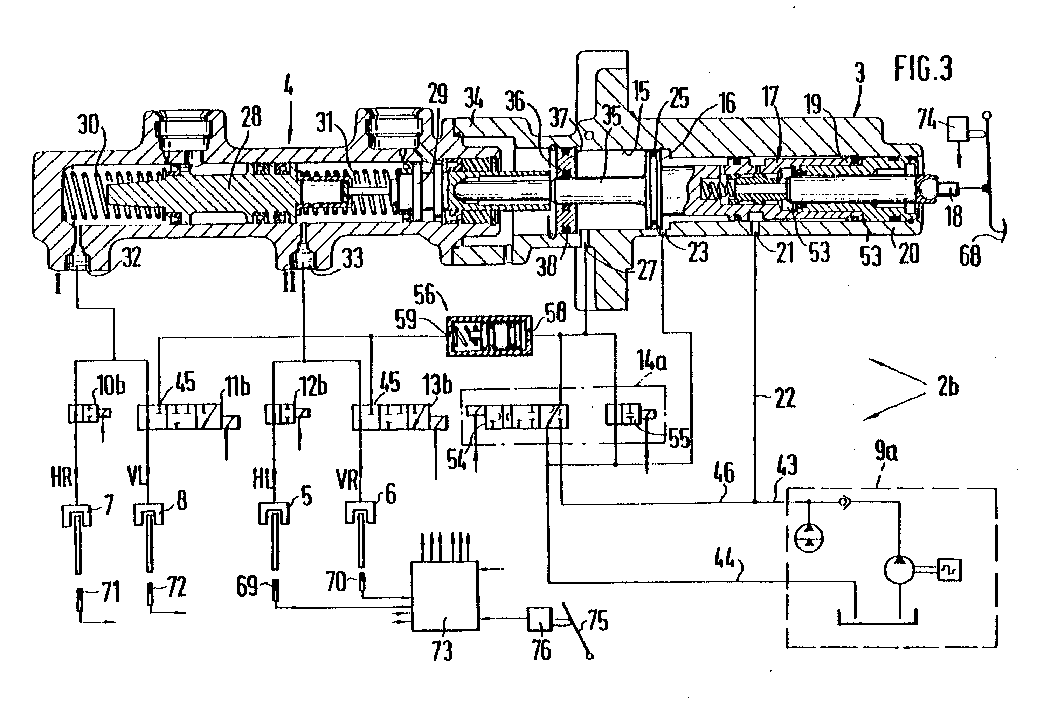

Fünf Ausführungsbeispiele der Erfindung sind in den Figuren 1 bis 5 der Zeichnung dargestellt und in der nachfolgenden Beschreibung näher beschrieben.

Beschreibung der Ausführungsbeispiele

Die in Figur 1 schematisch dargestellte Fahrzeugbremsanlage 2 hat einen Bremskraftverstärker 3, einen zweikreisigen Hauptbremszylinder 4, Radbremsen 5, 6, 7, 8, eine Druckquelle 9 und Ventilanordnungen 10, 11, 12, 13, 14, einen Hilfszylinder 15 und einen Hilfskolben 16.

Der Bremskraftverstärker 3 enthält ein beispielsweise aus dem Stand der Technik entnehmbares Bremsventil 17, das mittels eines Stößels 18 von einem Bremspedal 68 betätigbar ist, einen Verstärkerkolben 19 und einen Verstärkerzylinder 20, in dem der Verstärkerkolben 19 abdichtend verschiebbar gelagert ist. Im vorliegenden Ausführungsbei spiel ist das Bremsventil 17 in den Verstärkerkolben 19 eingebaut. Auf diese beispielsweise Ausführungsform kommt es jedoch nicht an. Zur Versorgung des Bremsventils 17 hat der Verstärkerzylinder 20 einen Anschluß 21, der über wenigstens eine Leitung 22 mit der Druckquelle 9 verbunden ist. Des weiteren hat der Verstärkerzylinder 20 einen Rücklaufanschluß 23, der über eine Rücklaufleitung 24 mit der Druckquelle 9 verbunden ist. In Arbeitsrichtung des Verstärkerkolbens 19 ist an den Verstärkerzylinder 20 der Hilfszylinder 15 angeformt. Der Hilfszylinder 15 hat einen größeren Durchmesser als der Verstärkerzylinder 20. Der Hilfskolben 16 ist mittels eines Dichtrings 25 am Hilfszylinder 15 abgedichtet. Der Hilfszylinder 15 hat einen Anschluß 27. Dieser Hilfszylinderanschluß 27 befindet sich an dem denjenigen Ende, das am weitesten vom Verstärkerkolben 19 entfernt ist.

Der zweikreisige Hauptbremszylinder 4 ist im Ausführungsbeispiel als ein Tandemhauptbremszylinder ausgebildet, dessen wesentliche Einzelteile zwei Hauptzylinderkolben 28 und 29 und zwei Rückstellfedern 30 und 31 sind. Der Hauptbremszylinder 4 hat zwei Bremsleitungsanschlüsse 32 und 33. Über weitere nicht bezifferte Anschlüsse ist der Hauptbremszylinder 4 mit einem nicht dargestellten Druckmittelvorratsbehälter verbunden. Der Hauptbremszylinder 4 ist koaxial zum Bremskraftverstärker 3 ausgerichtet und an einem an den Hilfszylinder 15 angeformten Zentrieransatz 34 befestigt. Zwischen dem Hauptzylinderkolben 29 und dem Hilfskolben 16 befndet sich eine an diesen angeformte Druckstange 35. Diese Druckstange 35 wird von einem Dichtring 36 umfaßt, der über eine Ringscheibe 37 getragen wird. Die Ringscheibe 37 ist unter Zuhilfenahme eines Dichtringes 38 abdichtend am Hilfszylinder 15 bei dessen Hilfszylinderanschluß 27 befestigt.

Die Bremsdruckquelle 9 hat einen Vorratsbehälter 39, eine Pumpe 40, die sich aus dem Vorratsbehälter versorgt, ein der Pumpe nachgeordnetes Rückschlagventil 41 und einen dem Rückschlagventil 41 nachgeordneten Druckspeicher 42. Von dem Rückschlagventil 41 und dem Druckspeicher 42 aus führt eine Druckleitung 43 aus der Druckquelle 9 heraus. Andererseits führt eine Rücklaufleitung 44 von außen zum Vorratsbehälter 39. Die Rücklaufleitung 24 ist an die Rücklaufleitung 44 angeschlossen. Sinngemäß ist die Druckleitung 22 an die Druckleitung 43 angeschlossen.

Im Ausführungsbeispiel ist die Radbremse 5 einem linken Hinterrad zugeordnet. Die Radbremse 6 ist einem diagonal gegenüberliegenden rechten Vorderrad zugeordnet. Beide Radbremsen 5 und 6 werden während normaler Bremsungen und im Blockierschutzbetrieb mit Bremsdruck aus dem Bremsleitungsanschluß 32 versorgt. Die Radbremse 7 ist einem rechten Hinterrad zugeordnet, während die Radbremse 8 einem linken Vorderrad zugeordnet ist. Im Ausführungsbeispiel sind die den Radbremsen 6 und 8 zugeordneten Vorderräder als Antriebsräder ausgebildet. Aus diesem Grund sind diese Radbremsen unter bestimmten Bedingungen in der erfindungsgemäßen Weise mit Bremsdrücken zu versorgen, die nicht im Hauptbremszylinder 4 erzeugt werden. Deshalb sind die zwischen den Bremsleitungsanschlüssen 32, 33 und den Radbremsen 6 bzw. 8 liegende Ventilanordnungen 11 und 13 als 3/3-Ventile ausgebildet, die elektromagnetisch steuerbar sind. In ihren Grundstellungen verbinden die Ventilanordnungen 11 und 13 den Bremsleitungsanschluß 32 mit der Radbremse 6 bzw. den Bremsleitungsanschluß 33 mit der Radbremse 8. In einer ersten Schaltstellung, der sogenannten Druckhaltestellung, werden die genannten Verbindungen unterbrochen. In einer dritten Schaltstellung werden Einspeisungsanschlüsse 45 mit den Radbremse 6 bzw. 8 verbunden. Dabei ist die vorher erwähnte Verbindung dieser Radbremsen 6 und 8 zu den Bremsleitungsanschlüssen 32 und 33 ebenfalls unterbrochen. Die anderen Radbremsen 5 und 7 sind lediglich über 2/2-Ventile 10 bzw. 12 mit den Bremsleitungsanschlüssen 32 bzw. 33 verbunden.

An die Druckleitung 43 und an die Rücklaufleitung 44 ist über Leitungen 46 und 47 die Ventilanordnung 14 angeschlossen. Diese ist in sehr einfacher Weise als ein 3/2-Ventil ausgebildet. Eine ebenfalls von dem 3/2-Ventil 14 ausgehende Leitung 48 ist über eine weitere Leitung 49 mit dem Hilfszylinderanschluß 27 verbunden. Von der Leitung 48 geht eine weitere Leitung 50 aus, die - schließlich über weitere Leitungen 51 und 52 mit den Anschlüssen 45 der Ventilanordnungen 11, 13 verbunden ist. In der Normalstellung unterbricht die Ventilanordnung 14 eine Verbindung von der Druckleitung 46 zu dem Hilfszylinderanschluß 27 und den Einspeisungsanschlüssen 45. In der Grundstellung besteht jedoch eine Verbindung von dem Hilfszylinderanschluß 27 und den Einspeiseanschlüssen 45 zu der Rücklaufleitung 44. Wird die Ventilanordnung 14 aus der Grundstellung elektromagnetisch in die Schaltstellung gesteuert, so werden der Hilfszylinderanschluß 27 und die Anschlüsse 45 der Ventilanordnungen 11 und 13 mit der Druckleitung 43 der Druckquelle 9 verbunden.

Die Fahrzeugbremsanlage 2 gemäß der Figur 1 arbeitet in der folgend beschriebenen Weise.

Zur Durchführung normaler Bremsungen wird über das erwähnte Bremspedal 68 und den Stößel 18 das Bremsventil 17 betätigt. Dadurch wird eine Verstärkerkammer 53 vom Rücklaufanschluß 23 und der Rücklaufleitung 24 getrennt. Dann stellt das Bremsventil 17 eine Verbindung zwischen dem Anschluß 21 und der Verstärkerkammer 53 her. Dadurch gelangt aus der Druckquelle 9 Druckmittel durch die Leitungen 43 und 22 in die Verstärkerkammer 53 und führt dort zu einem Druckanstieg. Dieser Druckanstieg bewirkt eine Beaufschlagung des Verstärkerkolbens 19, wodurch dieser unter Zwischenschaltung des Hilfskolbens 16 die Druckstange 35 und dadurch den Hauptzylinderkolben 29 verschiebt. Dies erzeugt in dem Hauptbremszylinder 4 einen Druck, der sich in den Bremsleitungsanschluß 33 fortpflanzt und auch verschiebend am Hauptzylinderkolben 28 angreift. Der Hauptzylinderkolben 28 seinerseits erzeugt wieder Bremsdruck, der sich in den zugeordneten Bremsleitungsanschluß 32 fortpflanzt. Von diesen Bremsleitungsanschlüssen aus gelangen die Bremsdrücke durch die sich in ihren Grundstellungen befindenden Ventilanordnungen 10, 11, 12, 13 in die nachgeordneten Radbremsen 5, 6, 7, 8. Ist in Zuordnung zur Ventilbetätigungskraft am Stößel 18 ein zugeordneter Verstärkungsdruck in der Verstärkerkammer 53 erreicht, so wird die Verbindung der Verstärkerkammer 53 zur Druckquelle 9 vom Hauptbremsventil 17 unterbrochen. Ein Loslassen des Bremspedals 68 bewirkt, daß der Stößel 18 und damit auch das Bremsventil 17 in die Bremsdruckabsenkstellung zurückkehrt, wodurch Verstärkungsdruck aus der Verstärkerkammer 53 durch den Rücklaufanschluß 23 entweicht. Infolgedessen verschwinden auch die Bremsdrücke an den Bremsleitungsanschlüssen 32 und 33.

Mit den Radbremsen 5, 6, 7 und 8 sind Raddrehungssensoren 69, 70, 71, 72 gekoppelt. Diese sind mit Eingängen eines elektronischen Steuergeräts 73 verbunden. Dieses Steuergerät 73 überwacht die Raddrehungssignale und stellt dabei fest, ob an einem oder mehreren Rädern des Fahrzeugs Radblockiergefahr auftritt infolge von gegebenenfalls für die vorhandene Fahrbahngriffigkeit zu hohen Bremsdrücken. Tritt beispielsweise der Fall ein, daß ein mit der Radbremse 5 gekoppelter Raddrehungssensor Raddrehungssignale in langsamerer Folge abgibt als Raddrehungssensoren, die den anderen Radbremsen zugeordnet sind, so steuert das Steuergerät 73 die Ventilanordnungen 11, 12, 13 in ihre Bremsdruckhaltestellungen und die Ventilanordnung 14 in seine Schaltstellung. Dies hat zur Folge, daß nun Druckmittel aus der Druckquelle 9 durch die Ventilanordnung 14 und den Hilfszylinderanschluß 27 in den Hilfszylinder 15 einströmt. Dadurch wird der Hilfskolben 16 entgegen dem Verstärkerkolben 19 beaufschlagt und verschiebt diesen auch gegen eine Kraft, die mittels des Bremspedals 68 über den Stößel 18 ausgeübt wird, in Richtung seiner Ausgangsstellung. Infolgedessen können die Hauptzylinderkolben 29 und 28 den von ihnen erzeugten Bremsdrücken ausweichen, wodurch die Bremsdrücke in den Bremsleitungsanschlüssen 32 und 33 absinken mit der Folge, daß auch durch die offen gebliebene Ventilanordnung 10 hindurch der Bremsdruck in der Radbremse 5 abnimmt. Das Abnehmen des Bremsdrucks beendet schließlich die Radblockiergefahr, so daß das Steuergerät 73 die Ventilanordnung 14 in ihre Grundstellung zurückfallen läßt. Dadurch wird die Verbindung zur Druckquelle 9 unterbrochen und der Hilfszylinder 15 wird zum Vorratsbehälter 29 druckentlastet. Infolgedessen weicht der Hilfskolben 26 der Kraft des Verstärkerkolben 19 aus und der Verstärkerkolben 19 verschiebt die Hauptzylinderkolben 29 und 28, so daß in der Radbremse 5 der Bremsdruck auf die ursprüngliche Höhe ansteigt. Ist der ursprüngliche Bremsdruck erreicht, so werden die Ventilanordnungen 11, 12, 13 auf Durchlassen gestellt. Dieser Vorgang wiederholt sich sinngemäß, wenn an einer der anderen Radbremsen 6, 7 oder 8 Radblockiergefahr auftritt.

Wie bereits in der Einleitung erwähnt, ist die Fahrzeugbremsanlage 2 auch zur Erzeugung von Bremsdrücken in Radbremsen eingerichtet, ohne daß hierzu eine Betätigung des Bremspedals 68 bzw. des Bremsventils 17 und des von ihm gesteuerten Bremskraftverstärkers 3 notwendig ist. Unterliegt beispielsweise ein mit der Radbremse 6 verbundenes Antriebsrad einem hohen Antriebsmoment, ohne daß dabei dieses Antriebsrad ausreichend Reibschluß zur unter ihm befindlichen Fahrbahn hat, so beginnt dieses Rad beschleunigt zu drehen, was über den zugeordneten Raddrehungssensor von dem hierfür besonders eingerichteten Steuergerät ebenfalls erkannt wird. Durch Einsteuern von Bremsdruck in die Radbremse 6 kann überflüssiges Antriebsdrehmoment durch Bremsmoment kompensiert werden, wodurch eine Antriebsschlupfbegrenzung stattfindet. Hierfür steuert das Steuergerät 73 die Ventilanordnung 14 ebenfalls wieder in die Schaltstellung, so daß in den Leitungen 48, 50, 51 und 52 und schließlich an den Einspeisungsanschlüssen 45 der Ventilanordnungen 11 und 13 Drücke anstehen. Zusätzlich steuert das Steuergerät 73 auch noch die Ventilanordnung 11 aus der Grundstellung über die Druckhaltestellung in die Druckeinspeisestellung, in der der Hauptbremszylinder 4 von der Radbremse 6 getrennt ist, jedoch eine Verbindung zwischen dem Einspeiseanschluß 45 und der Radbremse 6 geöffnet wird. Dadurch entsteht in der Radbremse derjenige Bremsdruck, der ein Bremsmoment zur Aufzehrung des überschüssigen Antriebsdrehmoments bewirkt. Demzufolge nimmt die Drehzahl des Antriebsrades ab, was wiederum vom Steuergerät 73 erkannt wird. Zum geeigneten Zeitpunkt steuert dieses deshalb die Ventilanordnung 14 zurück in ihre Grundstellung, wodurch die Radbremse 6 durch den Einspeisungsanschluß 45 und die Leitungen 51 und 47 zum Vorratsbehälter 39 druckentlastet wird. In gleicher Weise verfährt das Steuergerät 73, wenn an einem der Radbremse 8 zugeordneten Antriebsrad unerwünscht hoher Antriebsschlupf auftritt. Selbstverständlich können auch gleichzeitig zwei Antriebsräder zu Begrenzung von Antriebsschlupf gebremst werden. Dies kann unabhängig davon geschehen, ob beispielsweise die Antriebsräder über eine Differentialsperre oder ein Sperrdifferential miteinander verkuppelt sind.

Vorteilhafterweise kann das erwähnte Steuergerät auch weitergebildet oder eingerichtet sein zum Erzeugen von Bremsdrücken in Radbremsen dann, wenn das Fahrzeug beispielsweise vor Kreuzungen auf Steigungsstrecken vorübergehend angehalten wird. Hierzu wird das Steuergerät 73 an einen mit dem Bremspedal 68 gekoppelten Signalgeber 74 und an einen weiteren, mit einem Fahrpedal 75 gekoppelten Signalgeber 76 angeschlossen. Eine im Steuergerät 73 installierte Steuerlogik erkennt aufgrund von Signalen, daß das Fahrzeug mittels des Bremspedals 68 stillgesetzt ist. Dadurch wird die Ventilanordnung 14 in die Druckeinspeisestellung gesteuert. Durch gleichzeitiges Umsteuern der Ventilanordnungen 11 und 13 wird der Einspeisedruck in die Radbremsen 6 und 8 geleitet, so daß nunmehr das Fahrzeug im Stillstand gehalten wird, auch wenn nun das Bremspedal 68 losgelassen wird. Erst wenn durch Betätigung des Fahrpedals 75 dem Steuergerät 73 signalisiert wird, daß die Radbremsen zu lösen sind, läßt dieses die Ventilanordnungen 11, 13 und 14 in ihre Ausgangsstellungen zurückkehren.

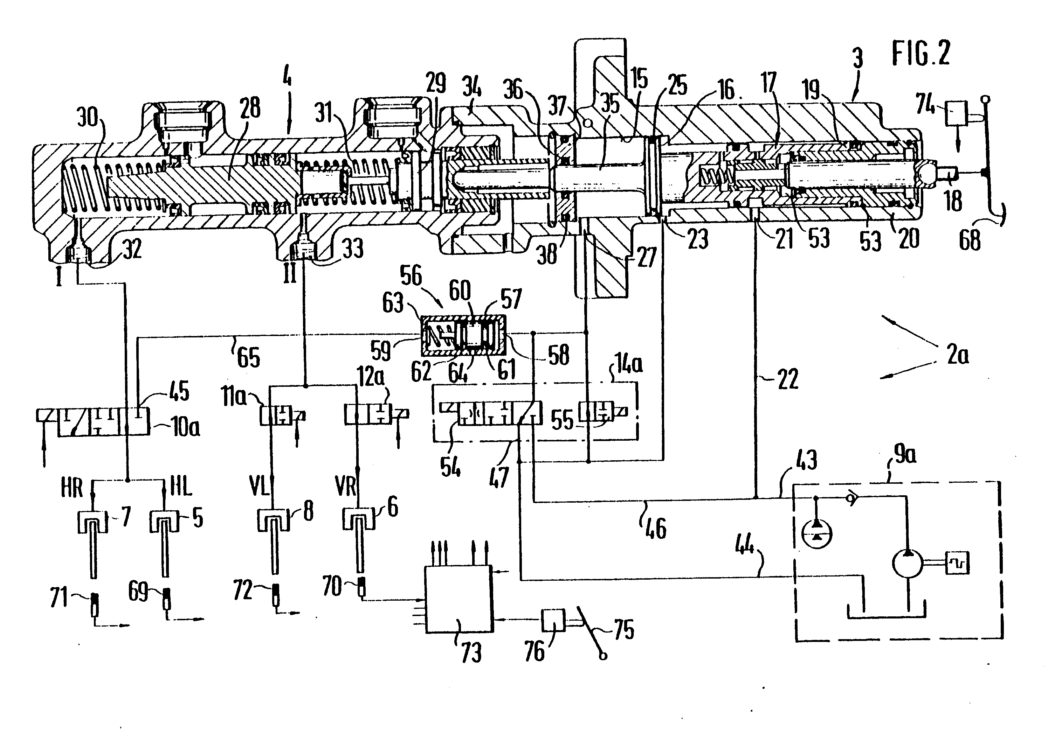

Das Ausführungsbeispiel einer Fahrzeugbremsanlage 2a gemäß der Figur 2 unterscheidet sich von dem Ausführungsbeispiel gemäß der Figur 1 im wesentlichen dadurch, daß eine Druckquelle 9a, anstelle von für Bremsanlagen üblichem Druckmittel, beispielsweise Mineralöl enthält. Außerdem ist die Bremsanlage insofern vereinfacht, daß Ventilanordnung 10a, 11a, 11b nur für Blockierschutzbetrieb und zum Halten des Fahrzeugs zwischen einer Abbremsung und einem Wiederstart eingerichtet sind. Der Bremskraftverstärker 3 arbeitet in der zuvor beschriebenen Weise, so daß bei einer Betätigung des Bremspedals 68 an den Bremsleitungsanschlüssen 32 und 33 Bremsdrücke zur Verfügung stehen. Dem Bremsleitungsanschluß 32 sind diesmal die Radbremsen 5 und 7 einer Hinterradachse zuordnet, während dem Bremsleitungsanschluß 33 die Radbremsen 6 und 8 von Vorderrädern zugeordnet sind. Im Blockierschutzbetrieb werden die Bremsdrücke der Hinterradbremsen 5 und 7 gemeinsam durch die Ventilanordnung 10a hindurch verändert. Dabei befindet sich diese Ventilanordnung 10a in ihrer dargestellten Grundstellung. Weil Vorderräder wesentlich mehr Beitrag zur Gesamtbremskraft leisten als Hinterräder, sind den Vorderradbremsen 6 und 8 jeweils eigene Ventilanordnungen 12a und 11a zugeordnet, über die die Radbremsen 6 und 8 mit dem Bremsleitungsanschluß 33 verbunden sind oder von diesem getrennt sind. Bremsdruckabsenkungen werden durch Ansteuern dieser Ventilanordnungen 10a, 11a, 12a sowie einer Ventilanordnung 14a im Sinne der vorangegangenen Beschreibung gesteuert. Im Unterschied zum Ausführungsbeispiel gemäß der Figur 1 enthält die Ventilanordnung 14a zwischen der Druckquelle 9a und dem Hilfszylinderanschluß 27 ein 3/3-Magnetventil 54 und zwischen dem Hilfszylinderanschluß 27 und einer Rücklaufleitung 44 der Druckquelle 9a ein 2/2-Magnetventil 55. In seiner Grundstellung ist das Magnetventil 55 geöffnet, so daß bei einer Verschiebung des Verstärkerkolbens 19 zum Zwecke des Aufbauens von Bremsdrücken der Hilfskolben 16 in Richtung des Hauptbremszylinders ausweichen kann. Auch das Magnetventil 54 befindet sich in einer Grundstellung, in der es den Hilfszylinderanschluß 27 mit der Rücklaufleitung 44 verbindet. Zur Druckentlastung des Hilfszylinders 15 stehen also in Redundanz zwei Magnetventile 54 und 55 zur Verfügung. Infolgedessen ist mit sehr großer Sicherheit eine Druckentlastung vorhanden, wenn dies zum Zwecke einer mittels des Bremspedals 68 gesteuerten Bremsung notwendig ist. Das Ventil 54 besitzt als eine erste Schaltstellung eine sogenannte Druckhaltestellung, in der alle Anschlüsse gegeneinander abgesperrt sind, sowie eine zweite Schaltstellung, durch die der Hilfszylinderanschluß 27 mit der Druckleitung 46 verbunden wird. Diese zweite Schaltstellung ist sinngemäß wieder dazu vorgesehen. Druck in den Hilfszylinder 15 einzuleiten und den Hilfskolben 16 zu beaufschlagen, so daß dieser dem Verstärkerkolben 19 entgegenwirkt. Wie bereits angedeutet werden dadurch im Hauptbremszylinder 4 Bremsdruckänderungen durch entsprechende Schaltstellungen der Ventilanordnungen 10a, 11a, 12a an derjenigen Radbremse wirksam, die Radblockiergefahr verursacht hat.

Weil sich das Mineralöl der Druckquelle 9a nicht mit derjenigen Flüssigkeit vermischen darf, die sich im Hauptbremszylinder 4 und in den Radbremsen 5 bis 8 befindet, ist als eine Medientrennvorrichtung zwischen der Ventilanordnung 14a und der Ventilanordnung 10a eine Schwimmkolbenanordnung 56 eingebaut. Diese hat einen Zylinder 57 mit an seinen Enden angeordneten Anschlüssen 58 und 59, einen Kolben 60 mit zwei Dichtungsringen 61 und 62, eine Rückstellfeder 63 und eine Entlastungsöffnung 64. Der Anschluß 58 ist wie der Hilfszylinderanschluß 27 an die Ventilanordnung 14a angeschlossen. Der Anschluß 59 ist über eine Leitung 65 mit einem Einspeiseeingang 45 der Ventilanordnung 10a verbunden. Die Rückstellfeder 63 ist so in den Zylinder 57 eingebaut, daß sie den Kolben 60 in Richtung des Anschlusses 58 belastet. Die Entlastungsöffnung 64 ist im wesentlichen auf halber Länge des Zylinders 57 so angeordnet, daß sie bei einer Verschiebung des Kolbens 60 zwischen seinen Endlagen von den Dichtungsringen 61 und 62 nicht überfahren wird. Zu diesem Zweck haben die Dichtungsringe voneinander einen Abstand, der größer ist als der Verschiebeweg des Kolbens 60 in dem Zylinder 57.

Tritt der Fall ein, daß nach einer Abbremsung des Fahrzeugs bis zum Stillstand mittels des Bremspedals 68 das Fahrzeug im Stillstand zu halten ist, dann wird wiederum mittels des Steuergeräts 73 die Ventilanordnung 14a in eine Schaltstellung gesteuert, die eine Verbindung sowohl des Hilfszylinderanschlusses 27 als auch des Anschlusses 58 der Schwimmkolbenanordnung 56 mit der Druckleitung 43 der Druckquelle 9a bewirkt. Infolgedessen wird mittels des durch den Anschluß 58 eintretenden Mineralöls der Kolben 60 in Richtung des Anschlusses 59 gegen die Wirkung der Rückstellfeder 63 so belastet, daß der Kolben 60 ein für die Radbremsen typischerweise verwendetes Druckmittel durch die Leitung 65 gegen den Einspeiseanschluß 45 drängt. Nunmehr braucht das Steuergerät 73 lediglich noch die Ventilanordnung 10a in ihre zweite Schaltstellung zu steuern, wodurch Bremsdruck zum Stillhalten des Fahrzeugs in den Radbremsen 5 und 7 entsteht. Während des Einsteuerns von Mineralöl in die Schwimmkolbenanordnung 56 wird das Ventil 55 in seine Sperrstellung gesteuert, so daß Mineralöl nicht nutzlos in die Rücklaufleitung 44 abströmen kann. Wird nunmehr das Fahrpedal betätigt, so steuert das Steuergerät 73 beide Ventile 54 und 55 und die Ventilanordnung 10a in ihre Grundstellungen zurück, so daß die Bremsdrücke aus den Radbremsen 5 und 7 verschwinden. Wie aus der Zeichnung und den Bezugszeichen ersichtlich, wurde im Gegensatz zur sogenannten diagonalen Bremskreisaufteilung des Ausführungsbeispiels 1 eine Vorn-Hinten-Aufteilung gewählt. Selbstverständlich könnte durch Einbau von mehreren 3/3-Ventilanordnungen zwischen die Bremsleitungsanschlüsse 32 und 33 und die Radbremsen 5 bis 8 die Fahrzeugbremsanlage 2 auch weitergebildet werden zur Begrenzung von Antriebsschlupf.

Das Ausführungsbeispiel einer Fahrzeugbremsanlage 2b gemäß der Fgur 3 hat ebenfalls wieder einen Bremskraftverstärker 3 und einen Hauptbremszylinder 4, Radbremsen 5 bis 8, eine Druckquelle 9a, eine Ventilanordnung 14a und eine Schwimmkolbenanordnung 56. Zwischen dem Bremsleitungsanschluß 32 und der Radbremse 7 ist eine Ventilanordnung 10b vorgesehen. Zwischen diesem Bremsleitungsanschluß 32 und der zugeordneten Radbremse 8 ist eine Ventilanordnung 13b eingebaut. Sinngemäß ist zwischen dem Bremsleitungsanschluß 33 und der Radbremse 5 eine Ventilanordnung 12b und zwischen dem genannten Bremsleitungsanschluß 33 und der Radbremse 6 eine Ventilanordnung 12b vorgesehen. Die Ventilanordnungen 12b und 10b sind lediglich für den Blockierschutzbetrieb bestimmt und deshalb als 2/2-Ventile ausgebildet. Die Ventilanordnungen 11b und 13b dienen zur Begrenzung von Antriebsschlupf und/oder dem kurzzeitigen Festhalten eines Fahrzeugs vor einer Weiterfahrt. Zu diesem Zweck sind die Ventilanordnungen 11b und 13b wiederum als 3/3-Ventile mit Einspeiseanschlüssen 45 ausgebildet. Die Anschlüsse 45 sind wiederum mit einem Ausgang 59 der Schwimmkolbenanordnung verbunden. Die Schwimmkolbenanordnung ihrerseits ist über ihren Anschluß 58 wieder an die Ventilanordnung 14a angeschlossen. Dieses Ausführungsbeispiel zeigt ebenfalls wieder eine sogenannte diagonale Bremskreisaufteilung. Aus diesem Grund sind, wenn beispielsweise angetriebene Vorderräder auch diejenigen Räder sind, über die das Fahrzeug vorübergehend stillgehalten wird, zwei als 3/3-Ventile ausgebildete Ventilanordnungen 11b und 13b not wendig. Da die Ventilanordnungen 10b, 11b, 12b, 13b und 14a technische Äquivalente zu den vorbeschriebenen Ventilanordnungen sind, erübrigt sich eine Funktionsbeschreibung dieses Ausführungsbeispiels.

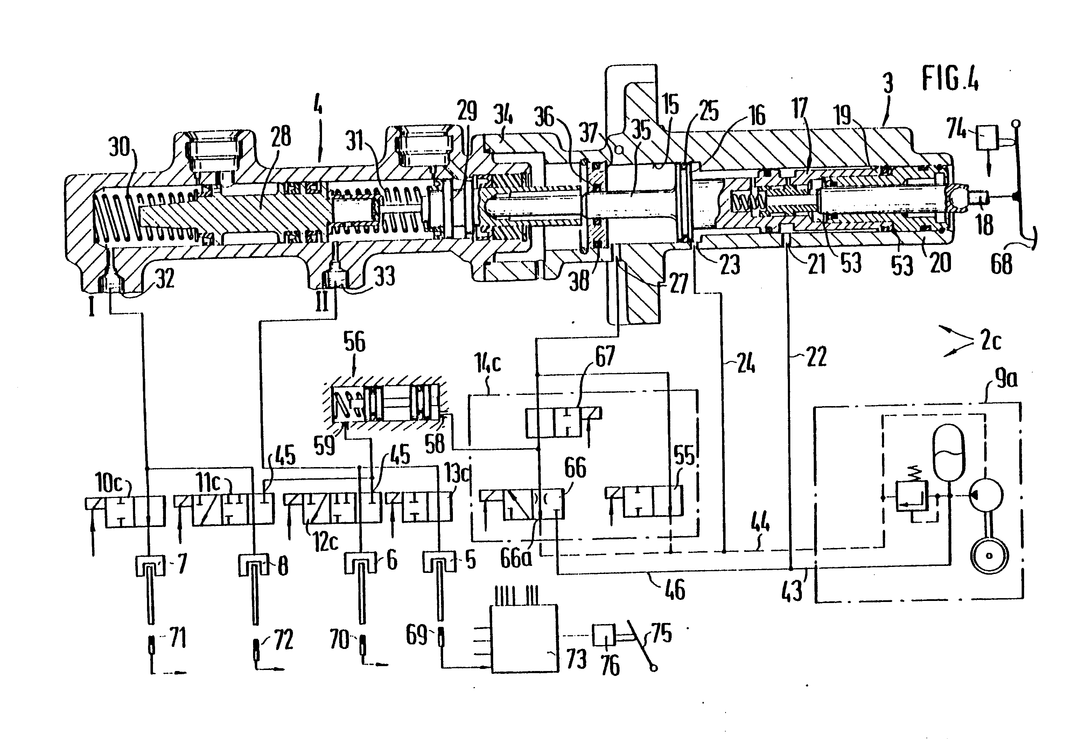

Das Ausführungsbeispiel einer Fahrzeugbremsanlage 2c gemäß der Figur 4 umfaßt einen Bremskraftverstärker 3, einen Hauptbremszylinder 4 mit Hauptzylinderkolben 28 und 29 und Bremsleitungsanschlüssen 32 und 33, Radbremsen 5, 6, 7, 8, eine Druckquelle 9a, Ventilanordnungen 10c, 11c, 12c, 13c und 14c, einen Hilfszylinder 15c mit einem Hilfskolben 16 und einer Druckstange 35 zwischsen dem Bremskraftverstärker 3 und dem Hauptbremszylinder 4. Die Radbremsen 6 und 8 von zwei Antriebsrädern sind auf die Bremsleitungsanschlüsse 32 und 33 verteilt. Die diesen Radbremsen 6 und 8 zugeordneten Ventilanordnungen 11c und 12c sind wiederum als 3/3-Ventile ausgebildet und mit Einspeiseanschlüssen 45 versehen. Diese Einspeiseanschlüsse sind ebenfalls wieder mit einem Anschluß 59 der aus den anderen Ausführungsbeispielen übernommenen Schwimmkolbenanordnung 56 verbunden. Ein Anschluß 58 dieser Schwimmkolbenanordnung 56 ist mit der Ventilanordnung 14c verbunden. Die Radbremsen 5 und 7 sind nicht antreibbaren Rädern zugeordnet, so daß diese lediglich über als 2/2-Ventile ausgebildete Ventilanordnungen 10c und 13c mit dem jeweiligen Bremsleitungsanschluß 32 bzw. 33 verbindbar oder von diesen trennbar sind.

Abweichend von den bereits beschriebenen Ausführungsbeispielen ist die Ventilanordnung 14c. Sie enthält jedoch das bereits beschriebene Ventil 55 zwischen einem Hilfszylinderanschluß 27 und einer Rücklaufleitung 44, die zur Druckquelle 9a führt. Zwischen der Schwimmkolbenanordnung 56 und einer Druckleitung 46, die aus der Druckquelle 9a versorgt wird, ist ein 3/2-Ventil 66 eingebaut. In seiner Grundstellung verbindet dieses Ventil 66 den Anschluß 58 der Schwimmkolbenanordnung 56 mit der Rücklaufleitung 44. Dabei kann das 3/2-Ventil 66 so ausgebildet sein, daß es in seiner Grundstellung wie eine Drossel wirkt. In seiner zweiten Stellung, der Schaltstellung, verbindet das 3/2-Ventil 66 die Druckleitung 46 mit dem Anschluß 58. In dieser Schaltstellung versorgt die Druckquelle 9a auch durch ein zwischen dem 3/2-Ventil 66 und dem Hilfszylinderanschluß 27 angeordnetes 2/2-Ventil 67 den Hilfszylinder 15 im Blockierschutzfall mit Druck. Damit hierbei kein Druckmittel nutzlos zur Rücklaufleitung 44 entweicht, wird im Blockierschutzbetrieb in bereits beschriebener Weise auch das Ventil 55 geschlossen. Wird in den Radbremsen zur Antriebsschlupfbegrenzung Bremsdruck benötigt, so kann das 2/2-Ventil 67 in seine Sperrstellung gesteuert werden, wodurch trotz erwünschter Bremsdruckanstiege in den angesprochenen Radbremsen der Hilfszylinder 15 drucklos bleibt. Dies hat den Vorteil, daß das Bremspedal ohne nennenswerten Kraftaufwand, d.h. also so wie normal, aus seiner Grundstellung bewegbar ist. Dadurch kann mittels des Bremspedals 68 ohne wesentliche Veränderung von dessen Pedalcharakteristik vom Fahrer willkürlich Bremsdruck im Hauptbremszylinder 4 erzeugt werden. Dieser Bremsdruck kann dann beispielsweise den nicht einer Antriebsschlupfbegrenzung dienenden Radbremsen 5, 7 zugeführt werden.

Ergänzend wird noch erwähnt, daß anstelle der in Form von 3/3-Ventilen ausgebildeten Ventilanordnungen natürlich auch andere Ventilanordnungen verwendet werden können, die dieselben Verbindungs-und Absperrmöglichkeiten bieten. So können beispielsweise dem Stand der Technik gemäß diese 3-Stellungsventile durch jeweils zwei 2-Stellungsventile ersetzt werden. Auch aus den Beschreibung der einzelnen Ventilanordnungen 14, 14a und 14c ist erkennbar, daß es unterschiedliche Möglichkeiten beim Aufbauen von Ventilanordnungen mit den gewünschten Steuerungseigenschaften gibt.

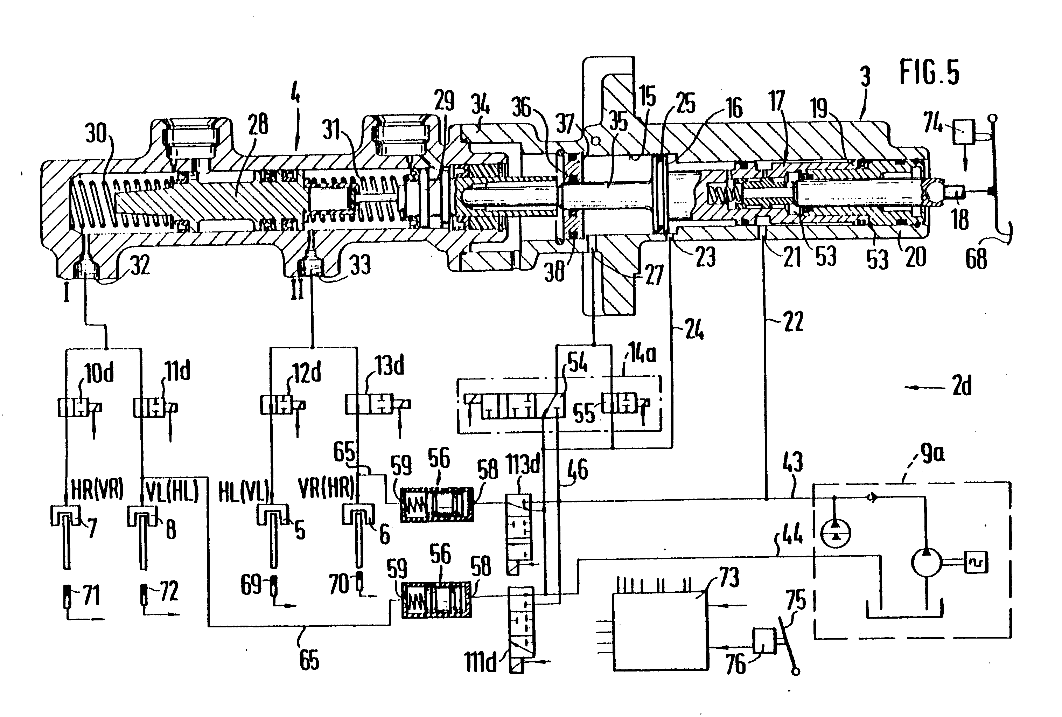

Das Ausführungsbeispiel einer Bremsanlage 2d gemäß der Figur 5 hat als wesentliche Bestandteile ebenfalls wieder einen Bremskraftver stärker 3, der über einen Stößel 18 mittels eines Bremspedals 68 steuerbar ist, einen Hauptbremszylinder 4, Radbremsen 5, 6, 7, 8, eine Ventilanordnung 14a mit bereits beschriebenen Ventilen 54 und 55, einen Hilfszylinder 15, einen in diesem verschiebbaren Hilfskolben 16 und eine Druckquelle 9a, die beispielsweise in schon vorher beschriebener Art zum Pumpen von Mineralöl ausgebildet ist. Aus diesem Grund ist wiederum mindestens eine Schwimmkolbenanordnung 56 erforderlich, die das Mineralöl von dem Druckmittel der Radbremsen trennt. Im Beispiel gemäß der Figur 5 sind zwei Schwimmkolbenanordnungen 56 vorgesehen, von denen die eine einer Radbremse 6, die aus einem Bremsleitungsanschluß 33 des Hauptzylinders 4 versorgt wird, und von denen die andere einer Radbremse 8, die vom Bremsleitungsanschluß 32 versorgt wird, zugeordnet ist. Die den Radbremsen 6 und 8 zugeordneten Ventilanordnungen sind ausgebildet in von Form von 2/2-Ventilen 11d, 13d und 3/2-Ventilen 111d, 113d. Die Ventile 111d und 113d verbinden in ihren Grundstellungen die Anschlüsse 58 der Schwimmkolbenanordnungen mit der Rücklaufleitung 44. Zusätzlich haben jedoch die Ventile 111d und 113d noch zwischen den Endstellungen eine Haltestellung, die beispielsweise aus dem Ventil 54 entnommen ist. In den zweiten Endstellungen leiten die Ventile 111d und 113d Druck der Druckquelle 9a zu den Anschlüssen 58. Die Kombination aus den Ventilanordnungen 11d und 111d sowie 13d und 113d hat ebenfalls wieder den Vorteil, daß Antriebsschlupf eines linken Antriebsrades unabhängig vom Antriebsschlupf eines rechten Rades begrenzbar ist. Die 3/3-Ventile 111d und 113d sind auch durch billigere 3/2-Ventile ersetzbar. Hierdurch ergibt sich der gleiche Vorteil wie beim Ausführungsbeispiel gemäß der Figur 4, dessen Ventilanordnung 14c so eingerichtet ist, daß eine Beaufschlagung des Hilfskolbens 16 zur Verhinderung von Blockiergefahr unabhängig durchführbar ist von einer Zuführung von Bremsdruck in Radbremsen zum Zweck der Antriebsschlupfbegrenzung oder zum Zweck des Stillhaltens eines Fahrzeugs vor dem Anfahren auf einer Steigungsstrecke.

In der Fahrzeugbremsanlage 2d gemäß der Figur 5 kann natürlich auch, wofür das Ausführungsbeispiel gemäß der Figur 1 das Vorbild bildet. eine Druckquelle 9 verwendet werden, die dasjenige Druckmittel pumpt, mit dem auch der Hauptbremszylinder 4 gefüllt ist. In diesem Fall kann natürlich auf die beiden Schwimmkolbenanordnungen 56 verzichtet werden.

Aus den Beschreibungen zu den Ausführungsbeispielen ergibt sich, daß alle diese Ausführungsbeispiele zur Verhinderung von Blockiergefahr ihren Bremskraftverstärkern zugeordnete Hilfskolben haben, und daß zur Begrenzung von Antriebsschlupf und/oder zum vorübergehenden Stillhalten des Fahrzeugs zwischen der den Bremskraftverstärker versorgenden Druckquelle und den jeweils zum Einsatz kommenden Radbremsen Ventilanordnungen liegen, um mittels Druck aus der Druckquelle ohne Verwendung des Hauptbremszylinders 4 Bremsdrücke zu erzeugen.

## Ansprüche

1. Hydraulische Fahrzeugbremsanlage mit Radbremsen, mit einem Hauptbremszylinder, mit einem wenigstens einen Verstärkerkolben aufweisenden Bremskraftverstärker, mit einer diesen versorgenden Druckquelle und mit einer Blockierschutzeinrichtung, die wenigstens einen Hilfskolben besitzt und zwischen dem Hauptbremszylinder und der wenigstens einen Radbremse wenigstens eine Ventilanordnung aufweist zum Unterbrechen von Verbindungen zwischen dem Hauptbremszylinder und den Radbremsen und wenigstens eine weitere Ventilanordnung hat, über die im Blockierschutzfall der Hilfskolben mit einem Druck entgegen der Wirkrichtung des Verstärkerkolbens beaufschlagbar ist, und zum Ansteuern der Ventilanordnungen unter Blockierschutzbedingungen ein elektrisch auf die Ventilanordnungen einwirkendes Steuergerät besitzt, dadurch gekennzeichnet, daß die Ventilanordnungen (10, 11, 12, 13, 14; 10a, 11a, 12a, 14a; 10b, 11b, 12b, 13b, 14a; 10c, 11c, 12c, 13c, 14c; 10d, 11d, 111d, 12d, 13d, 113d, 14a) zusätzlich eingerichtet sind zur Weiterleitung von Druck aus der Druckquelle (9, 9a) in wenigstens eine der Radbremsen (5, 6, 7, 8) bei gleichzeitiger Absperrung einer Verbindung zwischen dieser Radbremse und dem Hauptbremszylinder (4), und daß das Steuergerät (73) eingerichtet ist, zum Ansteuern dieser Ventilanordnungen (10, 11, 12, 13, 14; 10a, 11a, 12a, 14a; 10b, 111b, 12b, 13b, 14a; 10c, 11c, 12c, 13c, 14c; 10d, 11d, 111d, 12d, 13d, 113d, 14a) abhängig von zusätzlich vorgegebenen Bedingungen zur Erzeugung von Bremsdruck in wenigstens einer der Radbremsen.

2. Fahrzeugbremsanlage nach Anspruch 1, dadurch gekennzeichnet, daß das Steuergerät (73) an Raddrehungssensoren (69, 70, 71, 72) angeschlossen ist und zum Ermitteln von Antriebsschlupf eingerichtet ist sowie zur Abgabe von Steuersignalen an die Ventilanordnungen dann, wenn der Antriebsschlupf eine vorgegebene Schwelle überschreitet.

3. Fahrzeugbremsanlage nach Anspruch 1 oder 2, dadurch gekennzeichnet, daß das Steuergerät (73) an Raddrehungssensoren (69, 70, 71, 72) und an mit einem Bremspedal (68) und an mit einem Fahrpedal (75) gekoppelte Signalgeber (74, 76) angeschlossen ist und eingerichtet ist zum Ansteuern von Ventilanordnungen zu dem Zweck, daß zwischen dem Stillsetzen eines damit ausgerüsteten Fahrzeugs und der Wiederinbetriebnahme durch Niedertreten des Fahrpedals (75) unter Zuhilfenahme der Druckquelle (9, 9a) Radbremsen Bremsdruck zugeführt wird.

4. Fahrzeugbremsanlage nach einem der Ansprüche 1 bis 3, dadurch gekennzeichnet, daß die zwischen den Hauptbremszylinder (4) und die Radbremsen von antreibbaren Rädern eingefügten Ventilanordnungen (11, 13; 11b, 13b; 11c, 12c; 11d, 111d, 13d, 113d) wie als 3/3-Ventile wirkend ausgebildet sind, und daß deren wenigstens einer zusätzlicher Anschluß (45) die Druckquelle (9, 9a) beispielsweise zur Antriebsschlupfbegrenzung mit der jeweiligen Radbremse verbindet.

5. Fahrzeugbremsanlage nach einem der Ansprüche 1 bis 3, dadurch gekennzeichnet, daß die zwischen dem Hauptbremszylinder (4) und Radbremsen (5, 7) wenigstens einer Achse angeordnete Ventilanordnung (10a) als ein 3/3-Ventil ausgebildet ist, und daß deren dritter Anschluß (45) verbunden ist mit derjenigen Ventilanordnung (14a), die im Blockierschutzfall die Beaufschlagung des Hilfskolbens (16) steuert.

6. Fahrzeugbremsanlage nach einem der Ansprüche 1 bis 5, dadurch gekennzeichnet, daß zwischen die Radbremsen (5, 7; 6, 8) und die Druckquelle (9a) wenigstens eine Schwimmkolbenanordnung (56) eingebaut ist, die einen Zylinder (57) mit Anschlüssen (58, 59) an beiden Enden und einen abdichtend geführten Schwimmkolben (60) sowie ene Rückstellfeder (63) hat, die über den Kolben (60) mittels Druck aus der Druckquelle (9a) zusammendrückbar ist.

7. Fahrzeugbremsanlage nach einem der Ansprüche 4 bis 6, dadurch gekennzeichnet, daß die zwischen der Druckquelle (9a) und dem Hilfszylinder (15) angeordnete Ventilanordnung (14c) ein 3/2-Ventil (66) mit einem Rücklaufanschluß (66a) und zwischen diesem 3/2-Ventil (66) und dem Hilfszylinder (15) ein 2/2-Ventil (67) aufweist, und daß die wenigstens eine Radbremse über wenigstens eine der anderen Ventilanordnungen (11c, 12c) zwischen diesen beiden Ventilen (66, 67) anschließbar ist.

8. Fahrzeugbremsanlage nach einem der Ansprüche 4 bis 7, dadurch gekennzeichnet, daß zwischen dem Hilfszylinder (15) und einer Rücklaufleitung (44) ein als steuerbares 2/2-Ventil (55) ausgebildetes Sicherheitsdruckentlastungsventil angeordnet ist.

9. Fahrzeugbremsanlage nach einem der Ansprüche 1 bis 3, dadurch gekennzeichnet, daß zwischen wenigstens zwei Radbremsen (6, 8) und der Druckquelle (9a) in Serienanordnung wenigstens zwei Schwimmkolbenanordnungen (56), die je einen Zylinder (57), einen Kolben (60) und eine Rückstellfeder (63) aufweisen, eingefügt sind, und daß die Schwimmkolbenanordnungen (56) je über eine eigene Ventilanordnung (111d, 113d) mit der Druckquelle (9a) und einer Rücklaufleitung (44), die zur Druckquelle zurückführt, verbindbar sind.

FIG.1

0 281 769

21 078

**FIG.2**

FIG.3

0 281 769

FIG.4

FIG.5